# EUROPEAN PATENT APPLICATION

(11) **EP 4 600 154 A1**
(43) Date of publication of application: **13.08.2025**
(21) Application number: 25156275.7
(22) Date of filing: 06.02.2025
(51) Int. Cl.: B64D 13/02, B64D 13/06

(54) **INTEGRATED PNEUMATIC AND ELECTRIC CABIN AIR COMPRESSOR**

(30) Priority: 07.02.2024 US 202418435319
(71) Applicant: Hamilton Sundstrand Corporation, Charlotte, NC 28217-4578 (US)
(72) Inventor: ERNST, Jeffrey, Wethersfield, 06109 (US); VIGNALI, Mark G., Simsbury, CT, 06070 (US)
(74) Representative: Dehns

(57) **Abstract**

A pressurization system for a vehicle includes a plurality of medium sources including a first medium source (44), a second medium source (48), and a third medium source (50). A cabin air compressing device (26) is arranged in fluid communication with the plurality of medium sources. The cabin air compressing device includes a shaft (34), a compressor (30) connected to the shaft and at least one turbine (36) connected to the shaft. The compressor has a compressor inlet fluidly coupled to the first medium source and a compressor outlet fluidly connected to an inlet of a downstream environmental control system pack. Energy extracted within the at least one turbine is configured to drive the compressor.

## Description

### BACKGROUND

Exemplary embodiments pertain to the art of thermal management of and, in particular, to thermal management of one or more loads of a vehicle.

In general, contemporary air condition systems are supplied a pressure at cruise that is approximately 30 psig to 35 psig. The trend in the aerospace industry today is towards systems with higher efficiency. One approach to improve airplane efficiency is to eliminate the bleed air entirely and use electrical power to compress outside air. A second approach is to use lower engine pressure. The third approach is to use the energy in the bleed air to compress outside air and bring it into the cabin.

Environmental control systems commonly used on an aircraft may be driven by pressurized air suppled from a cabin air compressor. Air drawn from a source is delivered to a cabin air compressor for compression therein. The compressed air output from cabin air compressor then passes through a series of heat exchangers, an air cycle machine, and a water separator where the air is cooled and dehumidified. The resulting cool dry air is provided to the cabin, flight deck, and one or more other systems of the aircraft.

### BRIEF DESCRIPTION

According to an embodiment, a pressurization system for a vehicle includes a plurality of medium sources including a first medium source, a second medium source, and a third medium source. A cabin air compressing device is arranged in fluid communication with the plurality of medium sources. The cabin air compressing device includes a shaft, a compressor connected to the shaft and at least one turbine connected to the shaft. The compressor has a compressor inlet fluidly coupled to the first medium source and a compressor outlet fluidly connected to an inlet of a downstream environmental control system pack. Energy extracted within the at least one turbine is configured to drive the compressor.

In addition to one or more of the features described above, or as an alternative, in further embodiments the at least one turbine has a turbine inlet fluidly connected to both the second medium source and the third medium source.

In addition to one or more of the features described above, or as an alternative, in further embodiments the at least one turbine is a single turbine.

In addition to one or more of the features described above, or as an alternative, in further embodiments the at least one turbine is a dual entry turbine having a first nozzle and a second nozzle. The first nozzle is fluidly connected to the second medium source and the second nozzle is fluidly connected to the third medium source.

In addition to one or more of the features described above, or as an alternative, in further embodiments the at least one turbine includes a first turbine and a second turbine. The first turbine has a first turbine inlet fluidly connected to the second medium source and the second turbine has a second turbine inlet fluidly connected to the third medium source.

In addition to one or more of the features described above, or as an alternative, in further embodiments the at least one turbine has a turbine outlet fluidly connected to another inlet of the downstream environmental control system pack.

In addition to one or more of the features described above, or as an alternative, in further embodiments the at least one turbine has a turbine outlet and a flow at the outlet of the turbine is exhausted overboard from the vehicle.

In addition to one or more of the features described above, or as an alternative, in further embodiments the cabin air compressing device further includes an electric motor operably connected to the shaft and configured to drive the compressor.

In addition to one or more of the features described above, or as an alternative, in further embodiments a first medium provided from the first medium source is fresh air.

In addition to one or more of the features described above, or as an alternative, in further embodiments at least one of a second medium provided from the second medium source and a third medium provided from the third medium source is bleed air.

In addition to one or more of the features described above, or as an alternative, in further embodiments the bleed air provided from the second medium source has a temperature less than 450°F during all operating conditions of the vehicle.

In addition to one or more of the features described above, or as an alternative, in further embodiments at least one of a second medium provided from the second medium source and a third medium provided from the third medium source is cabin discharge air.

According to an embodiment, a method of pressurizing a medium for a vehicle includes compressing a first medium provided from a first medium source within a compressor to create a compressed first medium that is output at a compressor outlet, providing the compressed first medium output from the compressor outlet to an inlet of a downstream environmental control system pack, and extracting energy from at least one of a second medium provided from a second medium source and a third medium provided from a third medium source within at least one turbine. The energy extracted from the at least one of the second medium and the third medium is used to drive the compressor.

In addition to one or more of the features described above, or as an alternative, in further embodiments extracting energy from at least one of the second medium provided from the second medium source and the third medium provided from the third medium source within the at least one turbine further includes extracting energy from a mixture of the second medium and the third medium at the at least one turbine.

In addition to one or more of the features described above, or as an alternative, in further embodiments the second medium and the third medium are fluidly separate from one another during the extracting energy from at least one of the second medium provided from the second medium source and the third medium provided from the third medium source.

In addition to one or more of the features described above, or as an alternative, in further embodiments the at least one turbine is a dual entry turbine having a first flow path and a second flow path. The extracting energy from the second medium provided from the second medium source occurs within the first flow path and the extracting energy from the third medium provided from the third medium source occurs within the second flow path.

In addition to one or more of the features described above, or as an alternative, in further embodiments the at least one turbine includes a first turbine and a second turbine and the extracting energy from the second medium provided from the second medium source occurs at the first turbine and the extracting energy from the third medium provided from the third medium source occurs at the second turbine.

In addition to one or more of the features described above, or as an alternative, in further embodiments driving the compressor by an electric motor.

In addition to one or more of the features described above, or as an alternative, in further embodiments the first medium is fresh air.

In addition to one or more of the features described above, or as an alternative, in further embodiments at least one of the second medium and the third medium is bleed air.

### BRIEF DESCRIPTION OF THE DRAWINGS

The following descriptions should not be considered limiting in any way. With reference to the accompanying drawings, like elements are numbered alike:
FIG. 1 is schematic diagram of an air conditioning system of an aircraft according to an embodiment;
FIG. 2 is schematic diagram of an air conditioning system of an aircraft according to an embodiment; and
FIG. 3 is schematic diagram of an air conditioning system of an aircraft according to yet another embodiment.

### DETAILED DESCRIPTION

A detailed description of one or more embodiments of the disclosed apparatus and method are presented herein by way of exemplification and not limitation with reference to the Figures.

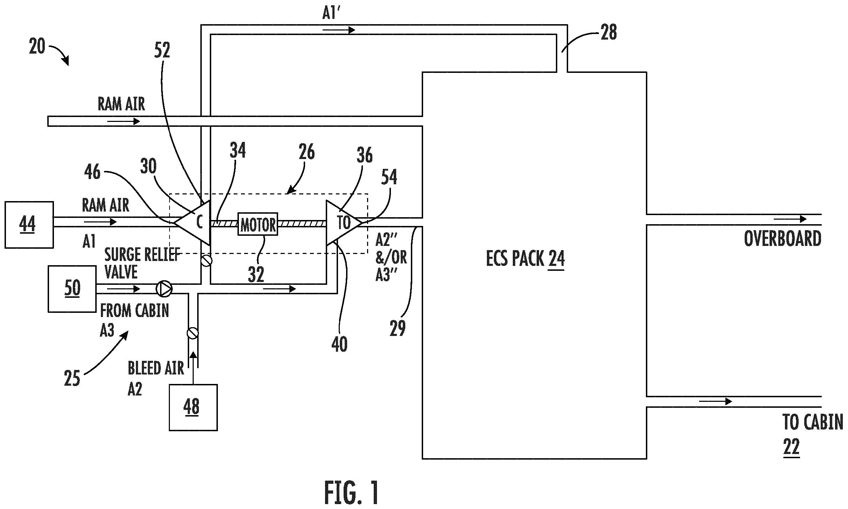

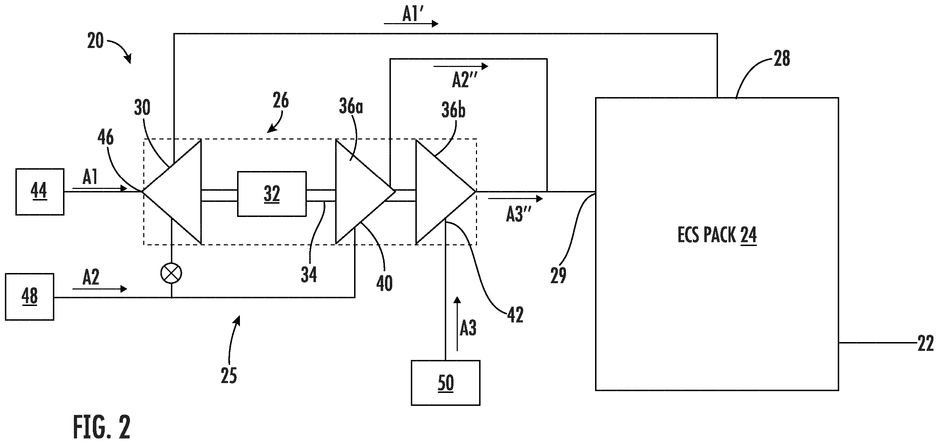

With reference to FIGS. 1 and 2, a schematic diagram of a portion of air conditioning system (ACS) 20 of a vehicle is illustrated. Although the air conditioning system 20 will be described with reference to an aircraft, alternative applications, such as another vehicle for example, are also within the scope of the disclosure. The air conditioning system 20 is operable to supply a conditioned medium to one or more loads, such as a cabin 22 of the vehicle, at a proper temperature and pressure. An air conditioning system 20 typically includes one or more environmental control system (ECS) packs 24. An ECS pack 24 includes various components which are packaged relatively close together. The ECS pack 24 typically includes components that can alter at least one of a temperature and a pressure of a medium provided thereto.

As shown, in an embodiment, the air conditioning system 20 may also include pressurization system 25 positioned upstream from one or more inlets of the ECS pack 24 relative to a flow of one or more mediums. In an embodiment, the pressurization system 25 includes at least one cabin air compressing device 26. For example, the cabin air compressing device 26 is arranged upstream from a first inlet 28 of the ECS pack 24 relative to a flow of first medium A1. Alternatively, or in addition, the cabin air compressing device 26 may be arranged upstream from a second inlet 29 of the ECS pack 24 relative to a flow of a second medium A2.

It should be understood that the elements of the air conditioning system 20 are connected via valves, tubes, pipes, and the like. Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium in any portion of the air conditioning system 20 can be regulated to a desired value.

The cabin air compressing device 26 includes a compressor 30 that is driven by another component. A compressor 30 is a mechanical device configured to raise a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc.

In an embodiment, the cabin air compressing device 26 additionally includes an electric motor 32 operably coupled to the compressor 30 via a shaft 34. The motor 32 can receive power from a power source (not shown) such as generator or a power bus (e.g., a power bus of an aircraft). Alternatively, or in addition to the electric motor 32, the cabin air compressing device 26 may include at least one turbine 36 operably coupled to the compressor 30 by the shaft 34. A turbine 36 is a mechanical device that expands one or more mediums provided thereto and extracts work therefrom (also referred to as extracting energy) to drive the compressor 30 via the shaft 34.

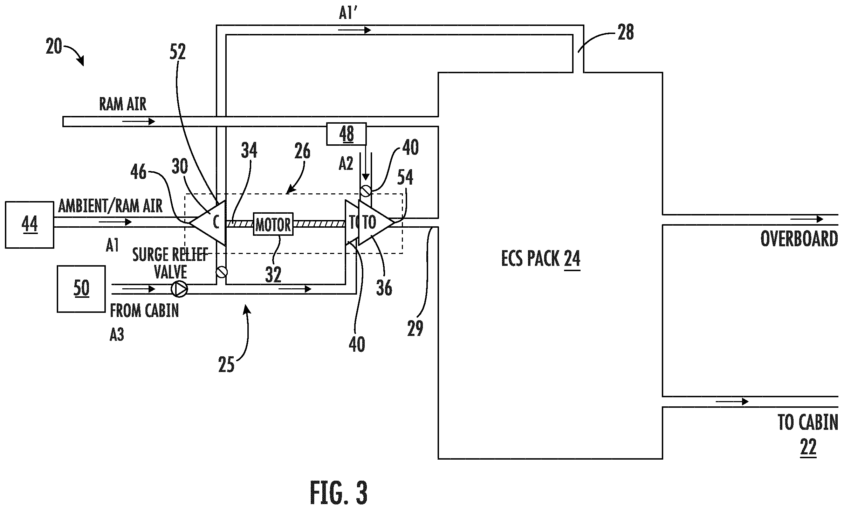

In the non-limiting embodiment of FIG. 1, the cabin air compressing device 26 includes a single turbine 36. In another embodiment, such as shown in FIG. 2, the cabin air compressing device 26 includes a first turbine 36a and a second turbine 36b. In other embodiments, such as shown in FIG. 3, the turbine 36 of the cabin air compressing device 26 may be a dual entry turbine. A dual entry turbine is configured to receive a plurality of flows of mediums. A dual entry turbine is configured with a first inlet or nozzle 40 arranged at a first entry point and a second inlet or nozzle 42 arranged at a second or different entry point, such that multiple flows can be received at the first inlet 40 and the second inlet 42 simultaneously. A first or inner flow path, aligned with and associated with the first nozzle 40 may have a first diameter, and a second or outer flow path aligned with and associated with the second nozzle 42 may have a second diameter. The two flow paths enable mixing of the respective flows at the outlet of the turbine 36.

The cabin air compressing device 26 is configured to receive a plurality of mediums from a plurality of medium sources at a plurality of inlets. The medium from each medium source may be different. For example, a first medium A1, provided from a first medium source 44, may be supplied to an inlet 46 of the compressor 30. In the illustrated, non-limiting embodiment, the first medium A1 is fresh air, such as outside air for example. This outside air, also referred to herein as RAM air, can be procured via one or more scooping mechanisms, such as an impact scoop or a flush scoop for example. When the air conditioning system 20 is implemented on an aircraft, the first medium A1 is generally at an ambient pressure equal to an air pressure outside of the aircraft when the aircraft is on the ground and is between an ambient pressure and a cabin pressure when the aircraft is in flight. It should be understood that any suitable first medium A1 is within the scope of the disclosure.

Another inlet of the cabin air compressing device 26, such as an inlet of a turbine 36 for example, may be configured to receive a flow of a second medium A2 from a second medium source 48. In such embodiments, a turbine 36 of the cabin air compressing device 26 is configured to extract work from the second medium A2. In embodiments where the air conditioning system 20 is used in an aircraft application, the second medium A2 may be bleed air, which is pressurized air originating from, i.e., being "bled" from, an engine or auxiliary power unit of the aircraft. It shall be understood that one or more of the temperature, humidity, and pressure of the bleed air can vary based upon the compressor stage and revolutions per minute of the engine or auxiliary power unit from which the air is drawn. In such embodiments, the pressurization system may additionally include a bleed air system for drawing air having a desired temperature and pressure from an engine. In an embodiment, the bleed air system is configured to supply low pressure air having a temperature of less than 450°C in all operating conditions. By supplying a second medium meeting these conditions, standard components of existing bleed air systems, such as a precooler and one or more valves for example, may be eliminated. In such embodiments, the cabin air compressing device 26 may be formed from a material, such as aluminum for example, and may protect against fuel ignition. However, embodiments where the temperature of the bleed air is greater than 450°C are also contemplated herein. In such embodiments, the cabin air compressing device 26 may be located remotely from a fuel vapor zone and/or may be formed from a suitable material, such as steel for example.

A third medium source 50 operable to supply a third medium A3 may also be fluidly connected to an inlet of the cabin air compressing device 26, for example to the inlet of a turbine 36. In an embodiment, the third medium source 50 is a volume, such as the cabin of the vehicle, and the third medium A3 is cabin discharge air, which is air leaving the volume and that would typically be discharged overboard from the vehicle. The turbine 36 of the cabin air compressing device 26 is configured to extract work from the third medium A3. In this manner, the pressurized air A3 of the volume 22 can be utilized by the cabin air compressing device 26 to achieve certain operations.

As shown in FIG. 1, the second medium source 48 and the third medium source 50 may be fluidly connected to the same inlet 40 of a single turbine 36. In such embodiments, a flow of only the second medium A2, a flow of only the third medium A3, or a flow that is a mixture of both the second medium A2 and the third medium A3 may be provided to the inlet 40. As shown, the second medium A2 and the third medium A3 may be mixed at a location upstream from the turbine inlet 40. The expanded flow of second medium A2, third medium A3, or mixture of second medium A2 and third medium A3 output from the turbine outlet 54 may be provided to the inlet 29 of the ECS pack 24.

In the embodiments shown in FIGS. 2 and 3, a flow of second medium A2, such as supplied directly from the second medium source 48, may be provided to the first turbine inlet 40 of the first turbine 36a or to the first inlet 40 of the dual entry turbine 36. Similarly, a flow of third medium A3, such as supplied directly from the third medium source 50, may be provided to the second turbine inlet 42 of the second turbine 36b, or to the second inlet 42 of the dual entry turbine 36.

As shown in the non-limiting embodiments illustrated in FIGS. 2 and 3, the second medium A2 and the third medium A3 may be mixed at or downstream from the outlet of the at least one turbine 36. For example, with a dual entry turbine 36, the second medium A2 and the third medium A3 are configured to mix at the turbine outlet 54. In embodiments including two separate turbines 36a, 36b, the respective flows of the second medium A2 and third medium A3 output from the turbines 36a, 36b may be mixed at any location downstream from the outlet of both turbines 36a, 36b, and upstream from an inlet, such as inlet 29 for example, of the ECS pack 24. However, embodiments where the flows of the second medium A2 and the third medium A3 remain fluidly distinct are also within the scope of the disclosure. For example, the first medium A2 and the second medium A3 output from the at least one turbine 36 may be provided to different components of the ECS pack 24, may be supplied to another subsystem of the vehicle, or may be exhausted overboard.

During operation in a first mode, such as when the vehicle is at a high altitude, the first medium A1 is provided to the compressor inlet 46. The act of compressing the first medium A1, heats and/or increases the pressure of the first medium A1. The compressor outlet 52 is fluidly connected to an inlet, such as inlet 28 of a downstream environmental control system pack 24. Accordingly, the compressed first medium A1' output from the outlet 52 of the compressor 30 is provided to the ECS pack 24 via inlet 28. A conditioned form of the compressed first medium A1' may ultimately be provided to the cabin 22 of the vehicle, may be provided to another subsystem of the vehicle, and/or may be exhausted overboard.

At the same time that the first medium A1 is provided to the compressor 30, at least one of the second medium A2 and the third medium A3 is provided to a turbine inlet of at least one turbine 36 of the cabin air compressing device 26. Within the at least one turbine 36, the second medium A2 and/or third medium A3 is expanded and work is extracted therefrom. The work extracted from the second medium A2 and/or third medium A3 within the at least one turbine 36 is used to drive the compressor 30. It should be understood that in some embodiments, the motor 32 may additionally be used in combination with the energy extracted from the at least one turbine 36 to drive the compressor 30.

During operation of the air conditioning system 20 in a second mode, such as when the vehicle is on the ground, the first medium A1 is similarly provided to the inlet 46 of the compressor 30. The act of compressing the first medium A1, heats and/or increases the pressure of the first medium A1. A compressed first medium A1' is output from an outlet 52 of the compressor 30 to an inlet 28 of the ECS pack 24. Because the engines are typically off when the vehicle is on the ground, the pressurization may not receive a flow of second medium A2. Accordingly, the motor 32 may be relied on to drive the drive the compressor 30. In some embodiments, the third medium A3 may be provided to an inlet of a turbine and the energy extracted from the third medium A3 within at least one turbine 36 may be used in combination with the motor to drive the compressor 30.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A pressurization system for a vehicle comprising:
a plurality of medium sources including a first medium source (44), a second medium source (48), and a third medium source (50);
a cabin air compressing device (26) arranged in fluid communication with the plurality of medium sources, the cabin air compressing device comprising:
a shaft (34);
a compressor (30) connected to the shaft, the compressor having a compressor inlet (46) and a compressor outlet (52), the compressor inlet being fluidly coupled to the first medium source and the compressor outlet being fluidly connected to an inlet (28) of a downstream environmental control system pack (24); and
at least one turbine (36) connected to the shaft, wherein energy extracted within the at least one turbine is configured to drive the compressor.

2. The pressurization system of claim 1, wherein the at least one turbine (36) has a turbine inlet (40), the turbine inlet being fluidly connected to both the second medium source (48) and the third medium source (50).

3. The pressurization system of claim 1 or 2, wherein the at least one turbine (36) is a single turbine.

4. The pressurization system of claim 1 or 2, wherein the at least one turbine (36) is a dual entry turbine having a first nozzle and a second nozzle, the first nozzle being fluidly connected to the second medium source (48) and the second nozzle being fluidly connected to the third medium source (50); or wherein the at least one turbine includes a first turbine (36a) and a second turbine (36b), the first turbine having a first turbine inlet fluidly connected to the second medium source and the second turbine having a second turbine inlet fluidly connected to the third medium source.

5. The pressurization system of any preceding claim, wherein the at least one turbine (36) has a turbine outlet, the turbine outlet being fluidly connected to another inlet of the downstream environmental control system pack (24); or wherein the at least one turbine has a turbine outlet and a flow at the outlet of the turbine is exhausted overboard from the vehicle.

6. The pressurization system of any preceding claim, wherein the cabin air compressing device (26) further comprises an electric motor (32) operably connected to the shaft (34) and configured to drive the compressor (30); and/or wherein a first medium provided from the first medium source (44) is fresh air.

7. The pressurization system of any preceding claim, wherein at least one of a second medium provided from the second medium source (48) and a third medium provided from the third medium source (50) is bleed air; and optionally wherein the bleed air provided from the second medium source has a temperature less than 450°F during all operating conditions of the vehicle.

8. The pressurization system of any preceding claim, wherein at least one of a second medium provided from the second medium source (48) and a third medium provided from the third medium source (50) is cabin discharge air.

9. A method of pressurizing a medium for a vehicle comprising:
compressing a first medium provided from a first medium source within a compressor to create a compressed first medium that is output at a compressor outlet;
providing the compressed first medium output from the compressor outlet to an inlet of a downstream environmental control system pack; and
extracting energy from at least one of a second medium provided from a second medium source and a third medium provided from a third medium source within at least one turbine, wherein the energy extracted from the at least one of the second medium and the third medium is used to drive the compressor.

10. The method of claim 9, wherein extracting energy from at least one of the second medium provided from the second medium source and the third medium provided from the third medium source within the at least one turbine further includes extracting energy from a mixture of the second medium and the third medium at the at least one turbine.

11. The method of claim 9 or 10, wherein the second medium and the third medium are fluidly separate from one another during the extracting energy from at least one of the second medium provided from the second medium source and the third medium provided from the third medium source.

12. The method of any of claims 9 to 11, wherein the at least one turbine is a dual entry turbine having a first flow path and a second flow path, and the extracting energy from the second medium provided from the second medium source occurs within the first flow path and extracting energy from the third medium provided from the third medium source occurs within the second flow path.

13. The method of any of claims 9 to 11, wherein the at least one turbine includes a first turbine and a second turbine and the extracting energy from the second medium provided from the second medium source occurs at the first turbine and the extracting energy from the third medium provided from the third medium source occurs at the second turbine.

14. The method of any of claims 9 to 13, further comprising driving the compressor by an electric motor.

15. The method of any of claims 9 to 14, wherein the first medium is fresh air; and/or wherein at least one of the second medium and the third medium is bleed air.
